(19) Europäisches Patentamt
European Patent Office
Office européen des brevets

(11) **EP 4 166 403 B1**

(12) **EUROPEAN PATENT SPECIFICATION**

(45) Date of publication and mention
of the grant of the patent:
**27.08.2025 Bulletin 2025/35**

(21) Application number: **21202677.7**

(22) Date of filing: **14.10.2021**

(51) International Patent Classification (IPC):
**B60T 17/22** *(2006.01)*      **F16D 66/00** *(2006.01)*

(52) Cooperative Patent Classification (CPC):
**F16D 66/00; B60T 17/221;** F16D 2066/001;
F16D 2066/006

(54) **SMART BRAKE SYSTEM AND METHOD**

INTELLIGENTES BREMSSYSTEM UND VERFAHREN

SYSTÈME ET PROCÉDÉ DE FREINAGE INTELLIGENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.04.2023 Bulletin 2023/16**

(73) Proprietor: **Hitachi, Ltd.**
**Tokyo 100-8280 (JP)**

(72) Inventor: **OHAZULIKE, Anthony**
**06560 Valbonne (FR)**

(74) Representative: **Mewburn Ellis LLP**
**Aurora Building**
**Counterslip**
**Bristol BS1 6BX (GB)**

(56) References cited:
**EP-A1- 0 594 113     JP-B2- 6 660 262**

**Description**

*Field of the Invention*

The present invention relates to a smart brake system, and a corresponding method for adjusting a brake clamping force to be applied to brake pads of a vehicle brake.

*Background*

When a vehicle is braking, brake pads clamp or rub against a brake rotor (e.g. a brake disc or drum) thus slowing down the vehicle. However, as a result of heat dissipation processes during braking, the temperature of the rotor rises causing the rotor to expand. As the amount of clamping force exerted by the brake pads can vary depending on the amount of rotor expansion, for at least this reason there is a relation between brake clamping force needed to slow down or stop the vehicle and rotor temperature.

When the vehicle is stationary during parking or idling, a parking brake is typically engaged with the brake clamping force being automatically set by an on-board computer. The same is true for autonomous vehicles that need to decelerate or stop automatically without driver input. In these cases, the computer estimates the amount of brake clamping force needed to keep the vehicle from moving without applying a clamping force that is in excess of what is needed. If the rotor temperature is high when the brake is engaged, a higher clamping force may be required to compensate for subsequent cooling and contraction of the rotor. Additionally, any slope of the ground, mass of the vehicle, or other factors, such as environmental conditions, may need to be taken into account when determining the clamping force.

Some vehicles perform real-time estimation of the rotor temperature in order to determine a precise brake clamping force. Thus one option is to install physical temperature sensors in the vehicle on or near the rotors or brake pads. However, for mass production units, the cost of installing such sensors is high.

Alternatively, some vehicles estimate the rotor temperature using a virtual temperature sensor. Such a sensor comprises a computer implemented thermal model which calculates the heat energy loss and gain of the rotor when the vehicle is on a journey. For example, US 2017/080909 proposes a vehicle control apparatus which compensates an applied clamping force according to an estimated rotor temperature. In US 2017/080909 the rotor temperature is estimated by calculating the heat energy lost or gained during braking. This calculation entails complex thermal modelling of the brake systems and the heat transfer characteristics of the rotors. For example, the heat energy calculations of US 2017/080909 require parameters including the dimensions and weight of the brake apparatus, a thermal coefficient of the rotor material, and a friction coefficient of the brake friction material.

Similarly, US2003/0081650 proposes an apparatus for estimating a vehicle brake rotor temperature. In US2003/0081650 the rotor temperature is estimated by calculating the heat energy loss or gain of the rotor using analytical equations. The heat energy loss is added to a previously estimated rotor temperature to estimate a new rotor temperature. The new rotor temperature is then used in subsequent temperature estimations and this calculation is repeated throughout a journey.

Systems such as those proposed in US 2017/080909 and US2003/0081650 require detailed knowledge of the physical and thermal properties of the rotors and brake systems on which to base their complex thermal models. Moreover, errors in the estimated rotor temperature can cumulatively add up throughout a journey adversely affecting the reliability and safety assurance of the vehicle brake system.

JP 6 660 262 B2 proposes a brake control system that estimates a vehicle brake rotor temperature by calculating the heat energy loss or gain of the rotor using analytical equations. The heat energy gain/loss is added to a previously estimated rotor temperature to estimate a new rotor temperature.

Therefore, a smart brake system is required which can more reliably estimate vehicle brake temperature from more readily available data.

*Summary of the Invention*

Accordingly, the present invention provides a smart brake system for adjusting a brake clamping force to be applied to brake pads of a vehicle brake in which the brake pads rub against a rotor to slow the vehicle, according to claim 1.

Advantageously, the rotor temperature can be estimated using data that is readily available in most vehicles. The temperature prediction model does not require complex thermal modelling of the rotor or surrounding systems. Moreover, the inclusion of elapsed time since a previous brake event and the duration of a previous brake event in the temperature prediction model allows appropriate weighting to be given to the heating effects of the previous brake event depending on how recently it happened. As a result, the smart brake system is able to more accurately estimate the current rotor temperature and perform finer adjustments to the applied brake clamping force.

The temperature prediction model may be a machine learning model which is trained using historical and/or simulated vehicle operation data and brake event data. For instance, the memory device may store a file of pretrained mathematical weights which can be applied to a function for predicting temperature. The model may be a regression model trained using K-nearest neighbours or a similar technique. The machine learning model may be a neural network such as an MLP (Multi Layer Perceptron). By using machine learning to develop the temperature prediction model, many different input parameters can easily be included which can increase the accuracy of the model. Moreover, such a system is able to estimate an absolute rotor temperature value as opposed to simply estimating a heat energy gain or loss. This reduces or avoids the production of cumulative errors, which can be a problem in conventional thermal models applied to brake systems.

The memory device may also store vehicle specification data, and the controller may be further configured to estimate the current temperature of the rotor from the vehicle specification data using the temperature prediction model; the vehicle specification data including one or more selected from the list comprising: dimensions of the rotor, mass of the rotor, brake pad contact surface area of the rotor, specific heat capacity of the rotor, dimensions of braked wheels of the vehicle, and vehicle mass. The use of such vehicle specification data can improve the accuracy of the current temperature estimation.

The memory device may also store a previous estimated temperature of the rotor which is the most recently estimated temperature of the rotor. The controller may be further configured to estimate the current temperature of the rotor from the previous estimated temperature using the temperature prediction model. Using the most recently estimated temperature in this way can also improve the accuracy of the current temperature estimation.

The vehicle operation data may also include one or more selected from the list comprising: current vehicle acceleration, current travel distance of a brake pedal, an estimate of kinetic energy of the rotor converted to heat during braking, the product of brake clamping force and vehicle speed, and the product of brake clamping force, vehicle speed and duration of the current brake event.

The estimate of the kinetic energy of the rotor converted to heat during braking (*Disc_heating_KE_1*) may be calculated as:

$$Disc\_heating\_KE\_1 = \tfrac{1}{2}\, m_c v_1^2 - \tfrac{1}{2}\, m_c v_2^2$$

where $m_c$ is the mass of the vehicle, $v_1$ is the vehicle speed at braking start, and $v_2$ is the current vehicle speed during braking. Alternatively, the estimate of the kinetic energy of the rotor converted to heat during braking (*Disc_heating_KE_2*) may be calculated as:

$$Disc\_heating\_KE\_2 = (pv_2 f_r)/(m_d c_d)$$

where $p$ is brake clamping force, $v_2$ is the current vehicle speed during braking, $f_r$ is brake pad contact surface area of the rotor, $m_d$ is the mass of the brake disc, and $c_d$ is the specific heat capacity of the rotor. Indeed, the vehicle operation data may include two or more different estimates of the kinetic energy of the rotor converted to heat during braking (e.g. *Disc_heating_KE_1* and *Disc_heating_KE_2*).

The data about the current brake event may also include one or both of: the vehicle speed at the beginning of the current brake event and the vehicle speed at the end of the current brake event.

The data about the previous brake event may also include the vehicle speed at the start of the previous brake event and the vehicle speed at the end of the previous brake event. These data further help to determine the appropriate weighting to be given to the heating effects of the previous brake event as they relate to how much heat was generated in the previous brake event. The data about the previous brake event may further include the average deceleration the previous brake event and/or the distance travelled by the vehicle since the end of the previous brake event.

The controller may be configured to adjust one or more brake fluid pressures to adjust the brake clamping force. The one or more brake fluid pressures may include a master cylinder pressure which controls a total brake clamping force applied to the brake pads of plural vehicle brakes of the vehicle and/or local brake cylinder pressures which each control a local brake clamping force applied to the brake pads of a respective one of the plural vehicle brakes of the vehicle.

Conveniently, the current brake clamping force of the vehicle operation data may be in the form of or derived from one or more currently-measured brake fluid pressures. As there is typically a direct relationship between brake fluid pressure and brake clamping force, using one or more brake fluid pressures in the temperature prediction model is generally equivalent to using an actual brake clamping force. Brake fluid pressures are typically more convenient to measure by sensors than actual brake clamping forces. Alternatively or additionally, the current brake clamping force may be estimated or measured from one or more other measurements such as a direct force (e.g. load cell) measurement, measurement of distance travelled by, or force applied to, a brake actuator (e.g. brake pedal), and measurement of deceleration of the vehicle.

The smart brake system of the first aspect may further comprise the vehicle sensors for measuring the vehicle operation data.

The controller may be configured: to estimate the current temperature of each of the rotors of plural vehicle brakes of the vehicle, and to adjust the brake clamping force applied to the brake pads of the vehicle brakes to compensate for the estimated current temperatures.

In a second aspect a method is provided of adjusting a brake clamping force to be applied to brake pads of a vehicle brake in which the brake pads rub against a rotor to slow the vehicle, according to claim 15. Thus, the method of the second aspect corresponds to the smart brake system of the first aspect. Accordingly, optional features of the smart brake system of the first aspect discussed above apply also to the method of the second aspect.

In a third aspect, there is provided a computer program comprising code which, when the code is executed on a computer-based controller, causes the controller to perform the method of the second aspect.

In a fourth aspect, there is provided a computer-readable data carrier storing thereon the computer program of the third aspect.

In a fifth aspect, there is provided a vehicle having one or more vehicle brakes and fitted with the smart brake system of claims the first aspect.

The invention includes the combination of the aspects and preferred features described except where such a combination is clearly impermissible or expressly avoided.

### *Summary of the Figures*

Embodiments and experiments illustrating the principles of the invention will now be discussed with reference to the accompanying figures in which:

Figure 1 shows a schematic of a smart brake system for adjusting a brake clamping force to be applied to the brake pads of a vehicle brake;

Figure 2 shows a schematic of a test bench brake system;

Figure 3 shows an example test scenario where a vehicle fitted with the smart brake system of Figure 1 brakes in two separate brake events; and

Figure 4 shows test results for four different temperature prediction models.

### *Detailed Description of the Invention*

Aspects and embodiments of the present invention will now be discussed with reference to the accompanying figures. Further aspects and embodiments will be apparent to those skilled in the art. All documents mentioned in this text are incorporated herein by reference.

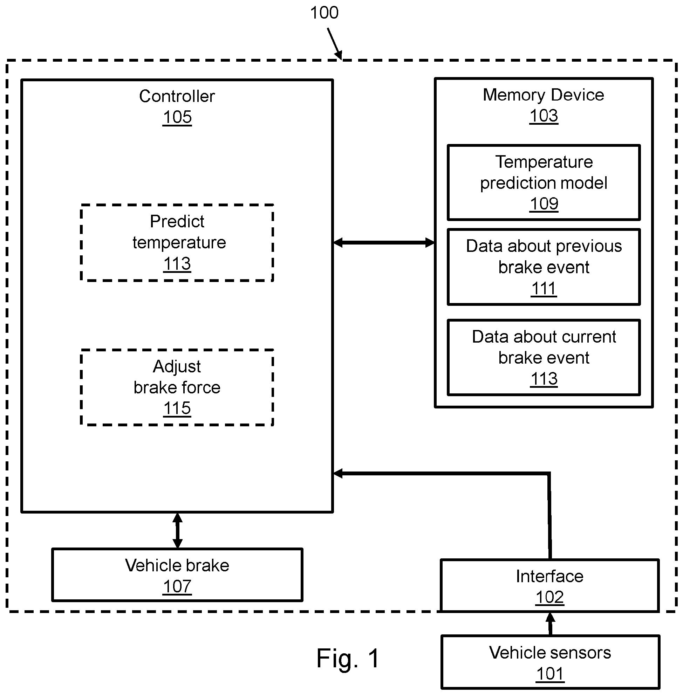

Figure 1 shows a schematic of a smart brake system 100 for adjusting a brake clamping force to be applied to the brake pads of a vehicle (e.g. automobile) brake. As the brake clamping force is increased, the pressure that the brake pads exert on the brake rotor is increased providing a greater resistance to movement of the vehicle.

The smart brake system 100 includes an interface 102 for receiving vehicle operation data from on-board vehicle sensors 101. A memory device 103 is provided for storing data about current 113 and previous 111 brake events. In addition, the memory device stores a temperature prediction model 109. A controller 105 is provided which implements a temperature prediction routine 113 to estimate a rotor temperature of the vehicle brake. The temperature prediction routine inputs the vehicle operation data and incoming data from the memory device as parameters to the temperature prediction model 109 in order to estimate the rotor temperature. The controller then uses a brake clamping force adjustment routine 115 to adjust the clamping force applied by the brake pads to the rotor according to the estimated rotor temperature.

If, as is usual, the vehicle has plural brakes, a similar process may be repeated in parallel to estimate the rotor temperature of multiple brakes on the same vehicle, and to adjust their brake clamping forces.

The controller 103 for the smart brake system 100 may be included as a software function in an ECU (electronic control unit) of the vehicle. Alternatively, the controller for the smart brake system may be separate to any such ECU. In this case, it may receive the vehicle operation data and data about current and previous brake events from the ECU, or some or all of the relevant vehicle sensors may communicate directly with the controller to provide these data.

Typically, the brake system is a hydraulic braking system in which the brakes are applied by increasing or decreasing one or more brake fluid pressures. This in-turn causes the brake clamping force applied by the brake pads to the rotor(s) to increase or decrease. The one or more brake fluid pressures may include a master cylinder pressure which controls a total brake clamping force applied to the brake pads of plural vehicle brakes of the vehicle. Alternatively or additionally, the brake fluid pressures may include local brake cylinder pressures which each control a local brake clamping force applied to the brake pads of a respective vehicle brake. Accordingly, the application of the brake clamping force in the smart brakes system 100 is typically controlled indirectly by controlling the one or more brake fluid pressures. Similarly, the brake clamping force is typically measured indirectly by measuring the one or more brake fluid pressures.

However, other approaches may be used to apply and/or measure the brake clamping force. These may be particularly relevant, e.g. in the case of mechanically or electronically actuated brakes, which may not use hydraulics at all.

The temperature prediction model 109 is typically a machine learning model which is trained on previously collected brake event and vehicle operation data. Throughout a journey and when applying a parking brake at the end of a journey, the vehicle operation data and data about a current 113 and previous 111 brake event are continuously updated. The rotor temperature can then be re-estimated by the controller 105 using the temperature prediction model 109 and the updated data at regular intervals. The last estimated temperature of the brake discs can also be used as an input parameter to the temperature prediction model. On start-up or after a long idling time, the last estimated temperature (or initial temperature) can be assumed to be the ambient temperature as measured by the vehicle sensors 101.

If the brake system is being fitted to an existing vehicle, the vehicle sensors 101 may include existing sensors of the vehicle. However, this does not exclude that vehicle sensors can be installed along with the brake system. The vehicle operation data may include data relating to the current journey or operation of the vehicle, and also data relating to conditions external to the vehicle. These data include current ambient temperature, current brake clamping force and current vehicle speed. For example, they may include, or be in the form of, any one or more of: current wheel speed, current data relating to vehicle speed, current acceleration, brake fluid pressure, current ambient temperature, other information about the weather conditions, the slope of the ground that the vehicle is parked or driving on, and any other external factors which may affect the temperature of the brake rotors. The vehicle operation data may also include the status of driver controls such as travel distance of a brake pedal or whether a parking brake has been applied.

The data stored in the memory device 103 about a current brake event 113 contain information relating to a current application of the brakes. A brake event may involve the application of the vehicle brakes by the driver during a journey or the application of a parking brake at the end of a journey. The data about a current brake event include a current braking time (or sliding time). This parameter is the elapsed time since the brake was first activated at the beginning of the current brake event. The current braking time may be deduced from changes in acceleration, wheel speed or brake fluid pressure, or driver controls may be monitored to signal that a brake event has started. The data about a current brake event may also include one or more of: estimated rotor temperature at the beginning of the brake event, vehicle distance travelled since the current brake event started, vehicle speed at the beginning of the brake event, and any other information about a current brake event which may be available from the vehicle sensors.

Similarly, the memory device 103 stores data about a previous brake event 111. These may include some or all of the data recorded for a current brake event, which are then retained in the memory device when that brake event finishes. The previous brake event is typically the most recent brake event where the vehicle brakes were applied and then released. However, these data may include data from multiple previous brake events, and/or a last significant brake event where the brakes were applied for a minimum duration or with a minimum force. The data about a previous brake event include: elapsed time since the previous brake event, and duration of the last brake event. They may also include one or more of: the vehicle speed at the start of the previous brake event, the vehicle speed at the end of the previous brake event, the average deceleration previous last brake event, distance travelled since the previous brake event, estimated temperature at the end of the previous brake event, and the number of brake events in a given journey. In this way, the temperature prediction model can account for residual heating in the brake discs as a result of recent braking.

By including an elapsed time since a previous brake event finished, the temperature prediction model 109 can apply an appropriate weighting to the heating effects of the last brake event. For instance, if a long time has passed since the previous brake event, the model may ignore the heating effects of the previous braking entirely in preference for assuming the current rotor temperature is close to ambient temperature. In this way, the model (described below) is able discriminate between the how much weight it gives the input data it receives. This improves the accuracy of the rotor temperature estimation since more sources of data may be used to inform the model.

The data from a previous brake event may also relate to braking from a previous journey where a vehicle has been driven to a destination and parked/turned off. Therefore, residual heating as an effect of braking during a different journey may be taken into account when the vehicle is restarted.

The temperature prediction model may also use vehicle specification data as input parameters. The vehicle specification data may be stored in the memory device 103 and may include any of: dimensions of the rotor or brake disc, mass of the rotor, brake pad contact surface area of the rotor, specific heat capacity of the rotor, dimensions of braked wheels of the vehicle, vehicle mass, vehicle type or model, position of the vehicle brake (for example at the front or rear of a vehicle), and/or other known specifications about the vehicle or brakes.

The vehicle operation data may include an estimate the amount of kinetic energy (KE) of the brake rotor that is converted to heat during braking. This estimate can then also be input to the temperature prediction model. The estimate of kinetic energy of the rotor converted to heat during braking (*Disc_heating_KE_1*) may be calculated as:

$$Disc\_heating\_KE\_1 = \tfrac{1}{2} m_c v_1^2 - \tfrac{1}{2} m_c v_2^2$$

where $m_c$ is the mass of the vehicle, $v_1$ is the vehicle speed at braking start, and $v_2$ is the current vehicle speed during braking. Alternatively or additionally, the estimate of kinetic energy of the rotor converted to heat during braking (*Disc_heating_KE_2*) may be calculated as:

$$Disc\_heating\_KE\_2 = (pv_2f_r)/(m_dc_d)$$

where $p$ is brake clamping force, $v_2$ is the current vehicle speed during braking, $f_r$ is brake pad contact surface area of the rotor, $m_d$ is the mass of the brake disc, and $c_d$ is the specific heat capacity of the rotor.

The machine learning model may be a regression model trained using analytical regression methods. For instance the regression model may be: K-nearest neighbours regression, Lasso regression (Least Absolute Shrinkage and Selection Operator), simple regression, ARD regression (Automatic Relevance Determination), Ridge regression, gradient boosted decision trees (such as XGBoost https://xgboost.readthedocs.io/en/latest/#), random forest regression, or random forest regression with extra tree regression (for example as described in https://scikit-learn.org/stable/modules/generated/sklearn.ensemble.ExtraTreesRegressor). Alternatively, the machine learning model may be a neural network such as an MLP regressor.

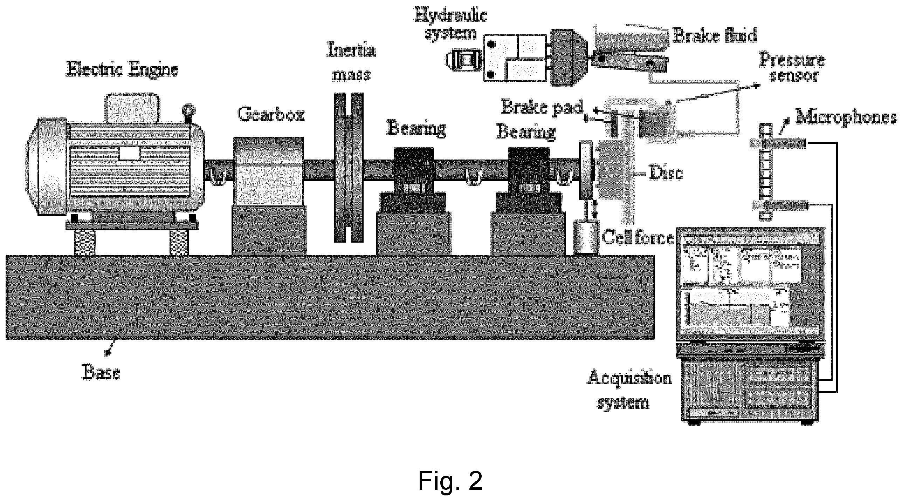

The machine learning model may be trained and tested using a test vehicle equipped with suitable sensors or using a test bench brake system, of the type shown schematically in Figure 2. The test bench brake system allows the simulation of possible real-life braking and acceleration scenarios. Control parameters which are input to the test bench brake system are also used as input parameters to the temperature prediction model which is being trained or tested. Sensors are used to monitor the previously described input parameters and the actual rotor temperature of the test bench brake system during the simulated scenarios. The sensor data (alongside the control parameters) are then used to train, test and calibrate the temperature prediction model. After training, the temperature prediction model 109 is stored in the memory device 103 as a file of pretrained mathematical weights which are used by the controller 105 to estimate the temperature in real time.

A large amount of data can be collected to train and test the temperature prediction model 109 by simulating many different test scenarios using the test bench brake system. The test scenarios can be varied by adjusting parameters such as the number of brake events performed, the length of sliding time (brake duration), the vehicle speed, the vehicle mass, and the simulated slope of the ground.

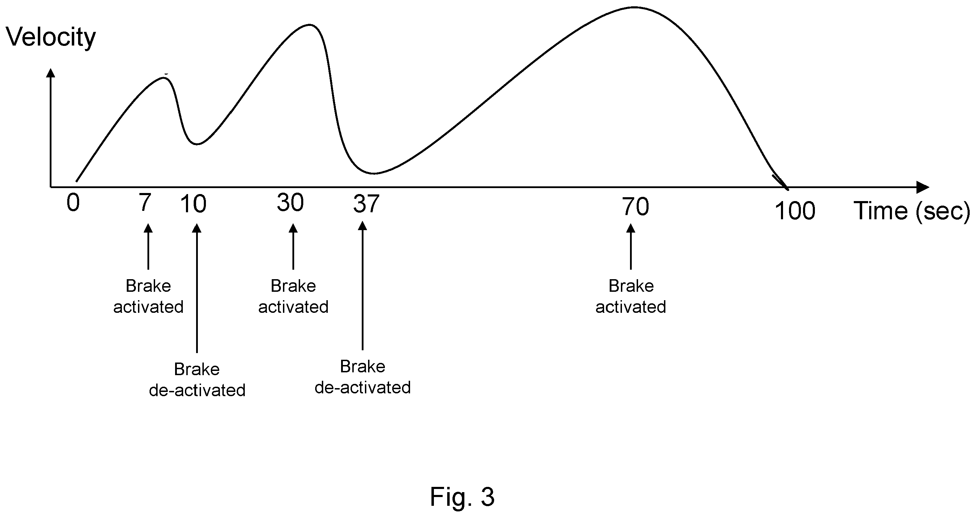

Figure 3 shows an example test scenario where the test bench brake system performed two different brake events. First the brake in Figure 3 is activated after 7 seconds. The sliding time of this brake event is 3 seconds at which point the brake is deactivated. This sliding time of 3 seconds is used as "the duration of the previous brake event" in subsequent rotor temperature estimations. Next the test bench "vehicle" speeds up to simulate a vehicle on a highway or freeway. This is shown by the increase in velocity of the velocity-time graph in Figure 3. At 30 seconds the brakes in Figure 3 are reactivated for 7 seconds. Finally, the brakes are activated again at 70 seconds bringing the test bench "vehicle" to a halt. At this point the "vehicle" is parked on a downward slope ranging from 0 to 25°, higher slopes requiring a larger clamping force to be applied by the brakes. Data from many different scenarios such as the example shown in Figure 3 can be collected to train, test, and update the temperature prediction model 109.

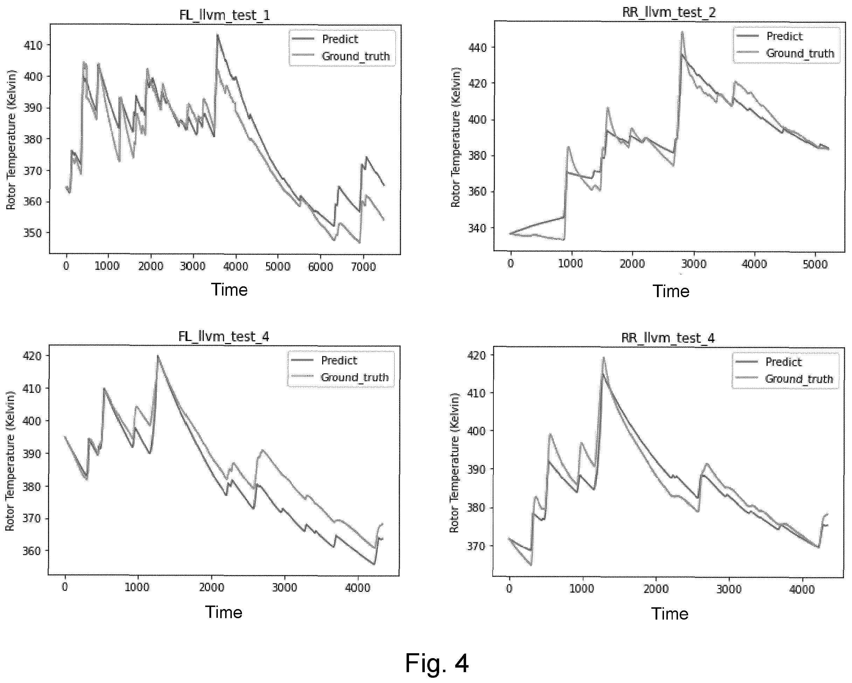

Figure 4 shows rotor temperature prediction test results for four different machine learning models which were tested using the same braking scenario. Ground truth data, measured using temperature sensors fitted to the test bench rotor, are shown in Figure 4 alongside the estimated rotor temperatures. As the journey progresses, the rotor temperature increases with time, depending on the number and type of braking scenarios which are performed.

In this way, the temperature prediction model 109 may be trained easily and adapted for new brake systems without the need to perform a complex thermal analysis of each brake rotor. Thus developing updated temperature prediction models for new brake systems is more straightforward than for conventional thermal heat loss models. In particular, many of the above-mentioned input parameters are readily available from existing vehicle specifications and sensors. Additional, more complex parameters, for example the thermal properties of the rotor used to estimate the kinetic energy lost to heat during braking, may be measured and added to the temperature prediction model if desired. These optional additional parameters may increase the fidelity of the temperature prediction and improve the accuracy of the resulting adjustments of brake clamping force. Moreover, cumulative errors in temperature estimation can be reduced because a machine learning model can be trained to recognise how much weighting to give to previous temperature estimates. Therefore, the smart brake system can be more reliable and safer than conventional brake systems.

For the avoidance of any doubt, any theoretical explanations provided herein are provided for the purposes of improving the understanding of a reader. The inventors do not wish to be bound by any of these theoretical explanations.

## Claims

1. A smart brake system (100) for adjusting a brake clamping force to be applied to brake pads of a vehicle brake (107) in which the brake pads rub against a rotor to slow the vehicle, the system comprising:

an interface (102) configured to receive vehicle operation data measured by vehicle sensors (101),
a memory device (103) configured to store data about a current brake event (113), and a temperature prediction model (109), and
a controller (105) operatively connected to the interface (102) and the memory device, and configured: to estimate the current temperature of the rotor using the temperature prediction model, and to adjust the brake clamping force applied to the brake pads to compensate for the estimated current temperature;
wherein:

the vehicle operation data include current ambient temperature, current brake clamping force and current vehicle speed,
the data about a current brake event (113) include the elapsed time since the current brake event started, and

**characterised in that**:

the memory device is further configured to store data about a previous brake event (111),
the data about a previous brake event (111) include the elapsed time since the previous brake event finished and the duration of the previous brake event, and
the controller (105) is configured to estimate the current temperature of the rotor from the vehicle operation data, the data about a previous brake event (111), and the data about a current brake event (113) using the temperature prediction model (109).

2. The smart brake system (100) of claim 1 wherein the temperature prediction model (109) is a machine learning model which is trained using historical and/or simulated vehicle operation data and brake event data.

3. The smart brake system (100) of claims 1 or 2 wherein the memory device (103) also stores vehicle specification data, and the controller (105) is further configured to estimate the current temperature of the rotor from the vehicle specification data using the temperature prediction model (109);
the vehicle specification data including one or more selected from the list comprising: dimensions of the rotor, mass of the rotor, brake pad contact surface area of the rotor, specific heat capacity of the rotor, dimensions of braked wheels of the vehicle, and vehicle mass.

4. The smart brake system (100) of any preceding claim wherein the memory device (103) also stores a previous estimated temperature of the rotor which is the most recently estimated temperature of the rotor, and the controller (105) is further configured to estimate the current temperature of the rotor from the previous estimated temperature using the temperature prediction model (109).

5. The smart brake system (100) of any preceding claim wherein the vehicle operation data also include one or more selected from the list comprising: current vehicle acceleration, current travel distance of a brake pedal, an estimate of kinetic energy of the rotor converted to heat during braking, the product of brake clamping force and vehicle speed, and the product of brake clamping force, vehicle speed and duration of the current brake event.

6. The smart brake system (100) of claim 5 wherein the estimate of kinetic energy of the rotor converted to heat during braking (*Disc_heating_KE_1*) is calculated as:

$$Disc\_heating\_KE\_1 = \tfrac{1}{2}\, m_c v_1^2 - \tfrac{1}{2}\, m_c v_2^2$$

where $m_c$ is the mass of the vehicle, $v_1$ is the vehicle speed at braking start, and $v_2$ is the current vehicle speed during braking.

7. The smart brake system (100) of claim 5 wherein the estimate of kinetic energy of the rotor converted to heat during braking (*Disc_heating_KE_2*) is calculated as:

$$Disc\_heating\_KE\_2 = (p v_2 f_r)/(m_d c_d)$$

where $p$ is brake clamping force, $v_2$ is the current vehicle speed during braking, $f_r$ is brake pad contact surface area of the rotor, $m_d$ is the mass of the brake disc, and $c_d$ is the specific heat capacity of the rotor.

8. The smart brake system (100) of any preceding claim wherein the data about the current brake event (113) also include one or both of: the vehicle speed at the beginning of the current brake event and the vehicle speed at the end of the current brake event.

9. The smart brake system (100) of any preceding claim wherein the data about the previous brake event (111) also include the vehicle speed at the start of the previous brake event and the vehicle speed at the end of the previous brake event.

10. The smart brake system (100) of any preceding claim wherein the controller (105) is configured to adjust one or more brake fluid pressures to adjust the brake clamping force.

11. The smart brake system (100) of claim 10 wherein the one or more brake fluid pressures include a master cylinder pressure which controls a total brake clamping force applied to the brake pads of plural vehicle brakes (107) of the vehicle and/or local brake cylinder pressures which each control a local brake clamping force applied to the brake pads of a respective one of the plural vehicle brakes (107) of the vehicle.

12. The smart brake system (100) of claims 10 or 11 wherein the current brake clamping force of the vehicle operation data is in the form of one or more currently-measured brake fluid pressures.

13. The smart brake system (100) of any preceding claim further comprising the vehicle sensors (101) for measuring the vehicle operation data.

14. The smart brake system (100) of any preceding claim wherein the controller (105) is configured: to estimate the current temperature of each of the rotors of plural vehicle brakes (107) of the vehicle, and to adjust the brake clamping force applied to the brake pads of the vehicle brakes (107) to compensate for the estimated current temperatures.

15. A method of adjusting a brake clamping force to be applied to brake pads of a vehicle brake (107) in which the brake pads rub against a rotor to slow the vehicle, the method comprising:

   receiving vehicle operation data measured by vehicle sensors (101),
   storing data about a current brake event (113) and a temperature prediction model (109),
   estimating the current temperature of the rotor using the temperature prediction model, and
   adjusting a brake clamping force applied to the brake pads to compensate for the estimated current temperature; wherein:

      the vehicle operation data include current ambient temperature, current brake clamping force and current vehicle speed,
      the data about a current brake event (113) include the elapsed time since the current brake event started, and

   **characterised in that**:

      the method further comprises storing data about a previous brake event (111),
      the data about a previous brake event (111) include the elapsed time since the previous brake event finished and the duration of the previous brake event, and
      the current temperature of the rotor is estimated from the vehicle operation data, the data about a previous brake event (111), and the data about a current brake event (113).

16. A computer program comprising code which, when the code is executed on a computer-based controller, causes the controller to perform the method of claim 15.

17. A computer-readable data carrier storing thereon the computer program of claim 16.

18. A vehicle having one or more vehicle brakes and fitted with the smart brake system (100) of any of claims 1 to 14.

**Patentansprüche**

1. Intelligentes Bremssystem (100) zum Einstellen einer Bremsklemmkraft, die auf Bremsbeläge einer Fahrzeugbremse (107) zu beaufschlagen ist, wobei die Bremsbeläge gegen einen Rotor reiben, um das Fahrzeug zu verlangsamen, wobei das System Folgendes umfasst:

eine Schnittstelle (102), die dazu ausgelegt ist, Fahrzeugbetriebsdaten zu empfangen, die durch Fahrzeugsensoren (101) gemessen werden,
eine Speichervorrichtung (103), die dazu ausgelegt ist, Daten über ein aktuelles Bremsereignis (113) und ein Temperaturvorhersagemodell (109) zu speichern,
eine Steuerung (105), die operativ mit der Schnittstelle (102) und der Speichervorrichtung verbunden ist und für Folgendes ausgelegt ist: Schätzen der Ist-Temperatur des Rotors unter Verwendung des Temperaturvorhersagemodells und Einstellen der Bremsklemmkraft, die auf die Bremsbeläge beaufschlagt wird, um die geschätzte Ist-Temperatur zu kompensieren;
wobei:

die Fahrzeugbetriebsdaten die Ist-Umgebungstemperatur, Ist-Bremsklemmkraft und Ist-Fahrzeuggeschwindigkeit umfassen,
die Daten über ein aktuelles Bremsereignis (113) die Zeit, die seit Beginn des aktuellen Bremsereignisses vergangen ist, umfassen und
**dadurch gekennzeichnet, dass**:

die Speichervorrichtung ferner dazu ausgelegt ist, Daten über ein vorausgehendes Bremsereignis (111) zu speichern,
die Daten über ein vorausgehendes Bremsereignis (111) die Zeit, die seit Ende des vorausgehenden Bremsereignisses vergangen ist, und die Dauer des vorausgehenden Bremsereignisses umfassen und
die Steuerung (105) dazu ausgelegt ist, die Ist-Temperatur des Rotors anhand der Fahrzeugbetriebsdaten, der Daten über ein vorausgehendes Bremsereignis (111) und der Daten über ein aktuelles Bremsereignis (113) unter Verwendung des Temperaturvorhersagemodells (109) zu schätzen.

2. Intelligentes Bremssystem (100) nach Anspruch 1, wobei das Temperaturvorhersagemodell (109) ein Maschinelles-Lernen-Modell ist, das unter Verwendung von historischen und/oder simulierten Fahrzeugbetriebsdaten und Bremsereignisdaten trainiert wird.

3. Intelligentes Bremssystem (100) nach Anspruch 1 oder 2, wobei die Speichervorrichtung (103) ferner Fahrzeugspezifizierungsdaten speichert und die Steuerung (105) ferner dazu ausgelegt ist, die Ist-Temperatur des Rotors anhand der Fahrzeugspezifizierungsdaten unter Verwendung des Temperaturvorhersagemodells (109) zu schätzen; wobei die Fahrzeugspezifizierungsdaten eines oder mehrere umfasst, das/die aus der Folgendes umfassenden Liste ausgewählt ist/sind: Abmessungen des Rotors, Masse des Rotors, Bremsbelagkontaktfläche des Rotors, spezifische Wärmekapazität des Rotors, Abmessungen von gebremsten Rädern des Fahrzeugs und Fahrzeugmasse.

4. Intelligentes Bremssystem (100) nach einem der vorangegangenen Ansprüche, wobei die Speichervorrichtung (103) ferner eine zuvor geschätzte Temperatur des Rotors speichert, welche die zuletzt geschätzte Temperatur des Rotors ist, und die Steuerung (105) ferner dazu ausgelegt ist, die Ist-Temperatur des Rotors anhand der zuvor geschätzten Temperatur unter Verwendung des Temperaturvorhersagemodells (109) zu schätzen.

5. Intelligentes Bremssystem (100) nach einem der vorangegangenen Ansprüche, wobei die Fahrzeugbetriebsdaten ferner eines oder mehrere umfasst, das/die aus der Folgendes umfassenden Liste ausgewählt ist/sind: Ist-Fahrzeugbeschleunigung, Ist-Verfahrweg eines Bremspedals, eine Schätzung von kinetischer Energie des Rotors, die während des Bremsvorgangs in Wärme umgewandelt wird, das Produkt von Bremsklemmkraft und Fahrzeuggeschwindigkeit und das Produkt von Bremsklemmkraft, Fahrzeuggeschwindigkeit und Dauer des aktuellen Bremsereignisses.

6. Intelligentes Bremssystem (100) nach Anspruch 5, wobei die Schätzung der kinetischen Energie des Rotors, die während des Bremsvorgangs in Wärme umgewandelt wird, (Scheibe_Erhitzen_KE_1) folgendermaßen berechnet wird:

$$\text{Scheibe\_Erhitzen\_KE\_1} = \tfrac{1}{2} m_c v_1^2 - \tfrac{1}{2} m_c v_2^2$$

worin $m_c$ für die Masse des Fahrzeugs steht, $v_1$ für die Fahrzeuggeschwindigkeit bei Beginn des Bremsvorgangs steht

und v$_2$ die Ist-Fahrzeuggeschwindigkeit während des Bremsvorgangs ist.

7. Intelligentes Bremssystem (100) nach Anspruch 2, wobei die Schätzung der kinetischen Energie des Rotors, die während des Bremsvorgangs in Wärme umgewandelt wird, (Scheibe_Erhitzen_KE_2) folgendermaßen berechnet wird:

$$\text{Scheibe\_Erhitzen\_KE\_2} = (pv_2f_r)/(m_dc_d)$$

worin p für die Bremsklemmkraft steht, v$_2$ für die Ist-Fahrzeuggeschwindigkeit während des Bremsvorgangs steht, f$_r$ für die Bremsbelagkontaktfläche des Rotors steht, m$_d$ für die Masse der Bremsscheibe steht und c$_d$ für die spezifische Wärmekapazität des Rotors steht.

8. Intelligentes Bremssystem (100) nach einem der vorangegangenen Ansprüche, wobei die Daten über das aktuelle Bremsereignis (113) ferner eines oder beide aus folgenden umfassen: die Fahrzeuggeschwindigkeit bei Beginn des aktuellen Bremsereignisses und die Fahrzeuggeschwindigkeit am Ende des aktuellen Bremsereignisses.

9. Intelligentes Bremssystem (100) nach einem der vorangegangenen Ansprüche, wobei die Daten über das vorausgehende Bremsereignis (111) ferner die Fahrzeuggeschwindigkeit bei Beginn des vorausgehenden Bremsereignisses und die Fahrzeuggeschwindigkeit am Ende des vorausgehenden Bremsereignisses umfassen.

10. Intelligentes Bremssystem (100) nach einem der vorangegangenen Ansprüche, wobei die Steuerung (105) dazu ausgelegt ist, einen oder mehrere Bremsfluiddruck/-drücke einzustellen, um die Bremsklemmkraft einzustellen.

11. Intelligentes Bremssystem (100) nach Anspruch 10, wobei der eine oder die mehreren Bremsfluiddruck/-drücke einen Master-Zylinderdruck, der eine Gesamtbremsklemmkraft, welche auf die Bremsbeläge von mehreren Fahrzeugbremsen (107) des Fahrzeugs beaufschlagt wird, und/oder lokale Bremszylinderdrücke, welche jeweils eine lokale Bremsklemmkraft, welche auf die Bremsbeläge einer entsprechenden aus den mehreren Fahrzeugbremsen (107) des Fahrzeugs beaufschlagt wird, steuert.

12. Intelligentes Bremssystem (100) nach Anspruch 10 oder 11, wobei die aktuelle Bremsklemmkraft der Fahrzeugbetriebsdaten in Form von einem oder mehreren aktuell gemessenen Bremsfluiddruck/-drücken vorliegt.

13. Intelligentes Bremssystem (100) nach einem der vorangegangenen Ansprüche, ferner umfassend die Fahrzeugsensoren (101) zum Messen der Fahrzeugbetriebsdaten.

14. Intelligentes Bremssystem (100) nach einem der vorangegangenen Ansprüche, wobei die Steuerung (105) für Folgendes ausgelegt ist: Schätzen der Ist-Temperatur von jedem aus den Rotoren von mehreren Fahrzeugbremsen (107) des Fahrzeugs und Einstellen der Bremsklemmkraft, die auf die Bremsbeläge der Fahrzeugbremsen (107) beaufschlagt wird, um die geschätzten Ist-Temperaturen zu kompensieren.

15. Verfahren zum Einstellen einer Bremsklemmkraft, die auf Bremsbeläge einer Fahrzeugbremse (107) zu beaufschlagen ist, wobei die Bremsbeläge gegen einen Rotor reiben, um das Fahrzeug zu verlangsamen, wobei das Verfahren Folgendes umfasst:

   Empfangen von Fahrzeugbetriebsdaten, die von Fahrzeugsensoren (101) gemessen werden,
   Speichern von Daten über ein aktuelles Bremsereignis (113) und eines Temperaturvorhersagemodells (109),
   Schätzen der Ist-Temperatur des Rotors unter Verwendung des Temperaturvorhersagemodells und
   Einstellen einer Bremsklemmkraft, die auf die Bremsbeläge beaufschlagt wird, um die geschätzte Ist-Temperatur zu kompensieren;
   wobei:

   die Fahrzeugbetriebsdaten die Ist-Umgebungstemperatur, Ist-Bremsklemmkraft und Ist-Fahrzeuggeschwindigkeit umfassen,
   die Daten über ein aktuelles Bremsereignis (113) die Zeit, die seit Beginn des aktuellen Bremsereignisses vergangen ist, umfassen und
   **dadurch gekennzeichnet, dass**
   das Verfahren ferner das Speichern von Daten über ein vorausgehendes Bremsereignis (111) umfasst,

die Daten über ein vorausgehendes Bremsereignis (111) die Zeit, die seit Ende des vorausgehenden Bremsereignisses vergangen ist, und die Dauer des vorausgehenden Bremsereignisses umfassen und die Ist-Temperatur des Rotors anhand der Fahrzeugbetriebsdaten, der Daten über ein vorausgehendes Bremsereignis (111) und der Daten über ein aktuelles Bremsereignis (113) geschätzt wird.

16. Computerprogramm, welches Code umfasst, der, wenn der Code auf einer computerbasierten Steuerung ausgeführt wird, bewirkt, dass die Steuerung ein Verfahren nach Anspruch 15 durchführt.

17. Computerlesbarer Datenträger, auf dem ein Computerprogramm nach Anspruch 16 gespeichert ist.

18. Fahrzeug mit einer oder mehreren Fahrzeugbremsen und das mit einem intelligenten Bremssystem (100) nach einem der Ansprüche 1 bis 14 versehen ist.

**Revendications**

1. Système de frein intelligent (100) pour ajuster une force de serrage de frein à appliquer aux plaquettes de frein d'un frein de véhicule (107) dans lequel les plaquettes de frein frottent contre un rotor pour ralentir le véhicule, le système comprenant :

   une interface (102) configurée pour recevoir des données de fonctionnement de véhicule mesurées par des capteurs de véhicule (101),
   un dispositif de mémoire (103) configuré pour stocker des données sur un événement de freinage en cours (113) et un modèle de prédiction de température (109), et
   un dispositif de commande (105) connecté de manière opérationnelle à l'interface (102) et au dispositif de mémoire, et configuré : pour estimer la température actuelle du rotor en utilisant le modèle de prédiction de température, et pour ajuster la force de serrage de frein appliquée aux plaquettes de frein pour compenser la température actuelle estimée ;
   dans lequel :

   les données de fonctionnement de véhicule incluent la température ambiante actuelle, la force de serrage de frein actuelle et la vitesse de véhicule actuelle,
   les données relatives à un événement de freinage actuel (113) incluent le temps écoulé depuis le début de l'événement de freinage actuel, et
   **caractérisé en ce que** :

   le dispositif de mémoire est en outre configuré pour stocker des données sur un événement de freinage précédent (111),
   les données concernant un événement de freinage précédent (111) incluent le temps écoulé depuis la fin de l'événement de freinage précédent et la durée de l'événement de freinage précédent, et
   le dispositif de commande (105) est configuré pour estimer la température actuelle du rotor à partir des données de fonctionnement de véhicule, des données concernant un événement de freinage précédent (111) et des données concernant un événement de freinage actuel (113) en utilisant le modèle de prédiction de température (109).

2. Système de freinage intelligent (100) selon la revendication 1, dans lequel le modèle de prédiction de température (109) est un modèle d'apprentissage automatique qui est entrainé en utilisant des données de fonctionnement de véhicule historiques et/ou simulées et des données d'événement de freinage.

3. Système de frein intelligent (100) selon la revendication 1 ou 2, dans lequel le dispositif de mémoire (103) stocke également des données de spécification de véhicule, et le dispositif de commande (105) est en outre configuré pour estimer la température actuelle du rotor à partir des données de spécification de véhicule en utilisant le modèle de prédiction de température (109) ;
   les données de spécification de véhicule incluant une ou plusieurs sélectionnées dans la liste comprenant : les dimensions du rotor, la masse du rotor, la surface de contact de plaquette de frein du rotor, la capacité thermique spécifique du rotor, les dimensions de roues freinées du véhicule et la masse du véhicule.

4. Système de frein intelligent (100) selon l'une quelconque des revendications précédentes, dans lequel le dispositif de mémoire (103) stocke également une température estimée précédente du rotor qui est la température estimée la plus récente du rotor, et le dispositif de commande (105) est en outre configuré pour estimer la température actuelle du rotor à partir de la température estimée précédente en utilisant le modèle de prédiction de température (109).

5. Système de frein intelligent (100) selon l'une quelconque des revendications précédentes, dans lequel les données de fonctionnement de véhicule incluent également un ou plusieurs éléments sélectionnés dans la liste comprenant : l'accélération actuelle du véhicule, la distance de déplacement actuelle d'une pédale de frein, une estimation de l'énergie cinétique du rotor convertie en chaleur pendant un freinage, le produit de la force de serrage de frein et de la vitesse de véhicule, et le produit de la force de serrage de frein, de la vitesse de véhicule et de la durée de l'événement de freinage actuel.

6. Système de frein intelligent (100) selon la revendication 5, dans lequel l'estimation de l'énergie cinétique du rotor convertie en chaleur pendant un freinage (*Disc_heating_KE_1*) est calculée comme suit :

$$Disc\_heating\_KE\_1 = 1/2\, m_c V_1{}^2 - 1/2\ M_c V_2{}^2$$

où $m_c$ est la masse du véhicule, $V_1$ est la vitesse de véhicule au démarrage du freinage, et $V_2$ est la vitesse de véhicule actuelle pendant un freinage.

7. Système de frein intelligent (100) selon la revendication 5, dans lequel l'estimation de l'énergie cinétique du rotor convertie en chaleur pendant un freinage (*Disc_heating_KE_2*) est calculée comme suit :

$$Disc\_Heating\_KE\_2 = (p v_2 f_r)/(m_d C_d)$$

où $p$ est la force de serrage du frein, $v_2$ est la vitesse de véhicule actuelle pendant un freinage, $f_r$ est la surface de contact de plaquette de frein du rotor, $m_d$ est la masse du disque de frein, et $C_d$ est la capacité thermique spécifique du rotor.

8. Système de frein intelligent (100) selon l'une quelconque des revendications précédentes, dans lequel les données concernant l'événement de freinage actuel (113) incluent également une ou les deux parmi : la vitesse de véhicule au début de l'événement de freinage actuel et la vitesse de véhicule à la fin de l'événement de freinage actuel.

9. Système de freinage intelligent (100) selon l'une quelconque des revendications précédentes, dans lequel les données concernant l'événement de freinage précédent (111) incluent également la vitesse du véhicule au début de l'événement de freinage précédent et la vitesse du véhicule à la fin de l'événement de freinage précédent.

10. Système de frein intelligent (100) selon l'une quelconque des revendications précédentes, dans lequel le dispositif de commande (105) est configuré pour ajuster une ou plusieurs pressions de liquide de frein pour ajuster la force de serrage de frein.

11. Système de frein intelligent (100) selon la revendication 10, dans lequel les une ou plusieurs pressions de liquide de frein incluent une pression de maître-cylindre qui commande une force de serrage de frein totale appliquée aux plaquettes de frein de plusieurs freins de véhicule (107) du véhicule et/ou des pressions de cylindre de frein locales qui commandent chacune une force de serrage de frein locale appliquée aux plaquettes de frein d'un certain respectif parmi les plusieurs freins de véhicule (107) du véhicule.

12. Système de frein intelligent (100) selon les revendications 10 ou 11, dans lequel la force de serrage de frein actuelle des données de fonctionnement de véhicule est sous la forme d'une ou plusieurs pressions de liquide de frein actuellement mesurées.

13. Système de frein intelligent (100) selon l'une quelconque des revendications précédentes, comprenant en outre les capteurs de véhicule (101) pour mesurer les données de fonctionnement de véhicule.

14. Système de frein intelligent (100) selon l'une quelconque des revendications précédentes, dans lequel le dispositif de commande (105) est configuré pour :

estimer la température actuelle de chacun des rotors de plusieurs freins de véhicule (107) du véhicule, et ajuster la force de serrage de frein appliquée aux plaquettes de frein des freins de véhicule (107) afin de compenser les températures actuelles estimées.

15. Procédé d'ajustement d'une force de serrage de frein à appliquer aux plaquettes de frein d'un frein de véhicule (107) dans lequel les plaquettes de frein frottent contre un rotor pour ralentir le véhicule, le procédé comprenant les étapes consistant à :

recevoir des données de fonctionnement du véhicule mesurées par des capteurs de véhicule (101), stocker des données sur un événement de freinage actuel (113) et un modèle de prédiction de température (109), estimer la température actuelle du rotor en utilisant le modèle de prédiction de température, et ajuster une force de serrage de frein appliquée aux plaquettes de frein pour compenser la température actuelle estimée ;
dans lequel :

les données de fonctionnement de véhicule incluent la température ambiante actuelle, la force de serrage de frein actuelle et la vitesse de véhicule actuelle, les données relatives à un événement de freinage actuel (113) incluent le temps écoulé depuis le début de l'événement de freinage actuel, et **caractérisé en ce que** :

le procédé comprenant en outre l'étape consistant à stocker des données concernant un événement de freinage précédent (111), les données concernant un événement de freinage précédent (111) incluent le temps écoulé depuis la fin de l'événement de freinage précédent et la durée de l'événement de freinage précédent, et la température actuelle du rotor est estimée à partir des données de fonctionnement de véhicule, des données concernant un événement de freinage précédent (111) et des données concernant un événement de freinage actuel (113).

16. Programme informatique comprenant un code qui, lorsque le code est exécuté sur un dispositif de commande informatique, amène le dispositif de commande à exécuter le procédé selon la revendication 15.

17. Support de données lisible par ordinateur stockant le programme informatique selon la revendication 16.

18. Véhicule présentant un ou plusieurs freins de véhicule et équipé du système de frein intelligent (100) selon l'une quelconque des revendications 1 à 14.

100

Fig. 1

Fig. 2

Fig. 3

EP 4 166 403 B1

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017080909 A
- US 20030081650 A

- JP 6660262 B